# EUROPEAN PATENT SPECIFICATION

(11) **EP 3 572 266 B1**
(45) Date of publication and mention of the grant of the patent: **19.10.2022**
(21) Application number: 18822721.9
(22) Date of filing: 02.05.2018
(51) Int. Cl.: B60K 17/16, B60K 1/00, B60L 15/00, B60B 35/16, B60K 5/12, B60G 11/113, B60G 11/04

(54) **VEHICLE COMPRISING A VEHICULAR DRIVING DEVICE**
FAHRZEUG MIT EINER FAHRZEUGANTRIEBSVORRICHTUNG
VÉHICULE AVEC UN DISPOSITIF DE CONDUITE DE VÉHICULE

(30) Priority: 30.06.2017 JP 2017128452
(43) Date of publication of application: 27.11.2019
(73) Proprietor: Daimler AG, 70372 Stuttgart (DE)
(72) Inventor: KANDORI, Akira, Kawasaki-shi Kanagawa 212-0058 (JP)
(74) Representative: Hofstetter, Schurack & Partner
(86) International application number: PCT/JP2018/017532
(87) International publication number: WO 2019/003633

(56) References cited:
- JP-U- S 508 609
- JP-U- S 508 609
- US-A- 4 560 027
- US-A- 4 564 082

## Description

### [Technical Field]

The present invention relates to a vehicle comprising a vehicle driving apparatus, and particularly a vehicle driving apparatus suitable for an electrically powered commercial car.

### [Background Art]

As a vehicle driving apparatus in the related art, there is a known driving unit in which a driving motor and a speed reducer are provided integrally with a differential gear (see Patent Literature 1, for example).

Commercial cars, such as trucks, are classified into a variety of car ranks on a vehicle specification basis, and the vehicle width that allows incorporation of a driving apparatus also varies in accordance with the car rank. An example of an axle structure that can handle the variety of car ranks may include a rigid axle structure using axle housings that accommodate the axles.

In the rigid axle structure, however, to incorporate the driving unit described above, since the entire driving unit is supported along with the axle housings in a non-suspended manner, the magnitude of vibration inputted to a motor incorporated in the driving unit increases, undesirably resulting in decrease in reliability of the motor.

### [Citation List]

**[Patent Literature]** US 4 560 027 A and US 4 564 082 A have already been used to produce such a vehicle driving apparatus having a driving unit housing that integrally accommodates a motor that drives a vehicle, a speed reducer that is linked to the motor, and a differential gear that is linked to the speed reducer. Furthermore, the apparatus comprising an axle housing to which a differential-side housing of the driving unit housing is linked and which integrally accommodates drive shafts of the driving wheels, a first support that allows a first rotary support shaft linked to a vehicle body of the vehicle to be elastically linked to the axle housing and the axle housing to swing around the first rotary support shaft as a center of rotation so that the axle housing is supported by the vehicle body; and a second support that allows a second rotary support shaft linked to the vehicle body of the vehicle to be elastically linked to a motor-side housing of the driving unit housing and the motor-side housing to swing around the second rotary support shaft as a center of rotation so that the motor-side housing is supported by the vehicle body.

JP S50 8609 U discloses a drive system in which the motor, speed reducer, differential device and axle are integrally assembled, the axle is used as the vertical leaf spring of the vehicle body, and the motor is attached to the vehicle body via elastic bodies.

### [Summary of the Invention]

### [Problem to be Solved by the Invention]

The present invention has been made to solve at least part of the problem described above, and an object of the present invention is to provide a vehicle driving apparatus capable of handling a variety of car ranks and ensuring the reliability of a motor.

### [Arrangement for Solving the Problem]

The present invention has been made to solve at least part of the problem described above and can be achieved in the following aspects or application examples.

The invention is defined by the subject-matter of the independent claim 1.

Potential additional embodiments form the subject-matter of the dependent claims.

### [Brief Description of Drawings]

**[****FIG. 1]** FIG. 1 is a perspective view of a vehicle driving apparatus according to a first embodiment of the present invention.
**[****FIG. 2]** FIG. 2 is a side view diagrammatically showing a structure that supports the vehicle driving apparatus shown in FIG. 1.
**[****FIG. 3]** FIG. 3 is a side view diagrammatically showing a structure that supports the vehicle driving apparatus according to a second embodiment of the present invention.

### [Mode for Carrying Out the Invention]

Embodiments of the present invention will be described below with reference to the drawings.

### (First embodiment)

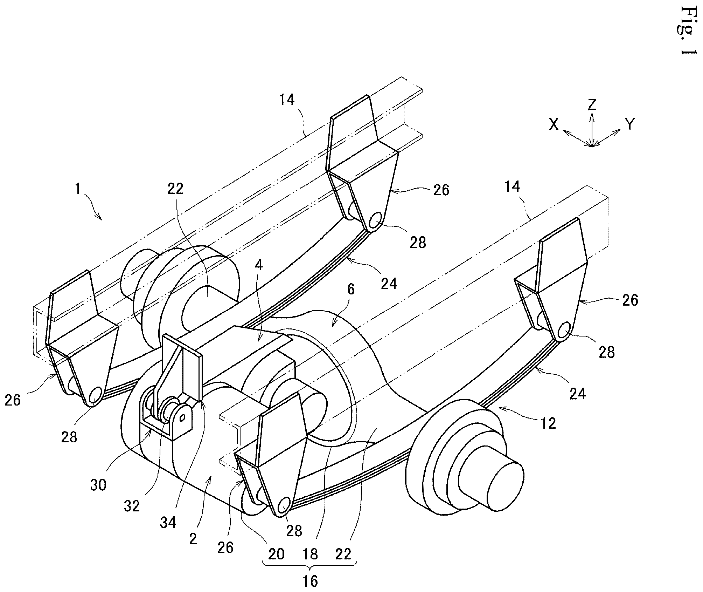

FIG. 1 is a perspective view of a vehicle driving apparatus according to a first embodiment of the present invention. The vehicle driving apparatus 1 (hereinafter also simply referred to as driving apparatus) is incorporated in a rear section of an electrically powered commercial vehicle (hereinafter also referred to as vehicle), such as an electrically powered truck. It is noted that an obliquely lower side in FIG. 1 is the front side of the vehicle.

A motor 2 as a driving source for travel is incorporated in the vehicle with a speed reducer 4 linked to the motor 2 and a differential 6 linked to the speed reducer 4. The driving force produced by the motor 2 is transmitted sequentially via the speed reducer 4, the differential 6, and a pair of drive shafts 8, which will be described later, to right and left wheels (driving wheels) 10, which will be described later. The wheels 10 are supported by respective side rails (vehicle body) 14, which extend via a suspension 12 in the vehicle frontward/rearward direction Y.

The motor 2, the speed reducer 4, and the differential 6, which form the driving apparatus 1, are integrally accommodated in a driving unit housing 16. The driving unit housing 16 is generally formed of a differential-side housing 18, which accommodates the differential 6, a motor-side housing 20, which accommodates the motor 2 and the speed reducer 4, and a pair of axle housings 22, which accommodate a pair of drive shafts 8 in an integrated manner. The differential-side housing 18 is linked to the motor-side housing 20, specifically, the rear side thereof in the vehicle frontward/rearward direction Y, and the pair of axle housings 22 are linked to the differential-side housing 18, specifically, the opposite sides thereof in the vehicle width direction X.

The suspension 12 is formed of the pair of axel housings 22, a pair of leaf springs 24, and other components, which form a rigid axle structure. The pair of leaf springs 24 extend in the vehicle frontward/rearward direction Y, and the opposite ends of each of the leaf springs 24 are suspended by the corresponding side rail 14 via first brackets (first supports) 26. The axle housings 22 are suspended by the respective leaf springs 24. The wheels 10 are thus elastically supported by the respective leaf springs 24.

The opposite ends of the leaf springs 24 are each rotatably linked to the corresponding first bracket 26 via a first hinge pin (first rotary support shaft) 28. A second bracket (second support) 30 is fixed to a front portion of the motor-side housing 20. The second bracket 30 is so linked to a third bracket 34 as to be rotatable relative thereto via a second hinge pin (second rotary support shaft) 32.

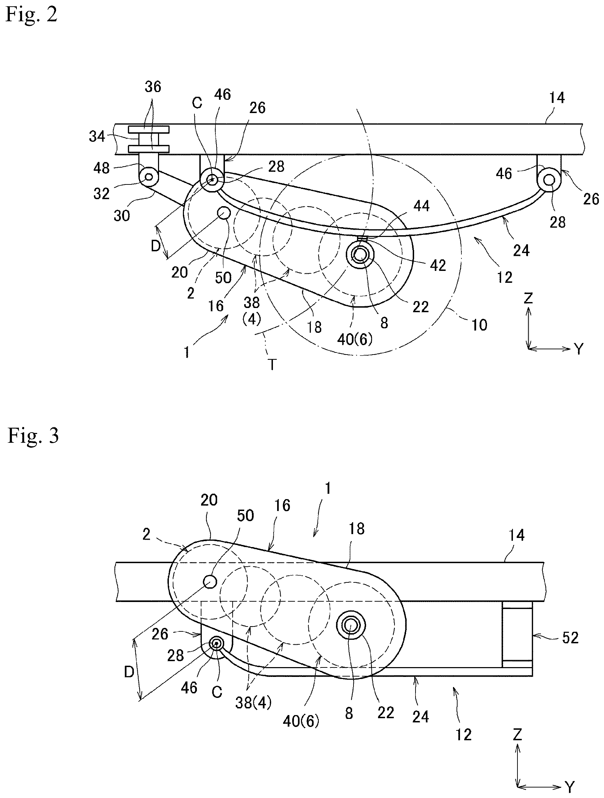

FIG. 2 is a side view diagrammatically showing a structure that supports the driving apparatus 1. Cross members (vehicle body) 36 are located between the side rails and fixed thereto. The third bracket 34 is fixed to the cross members 36. Two reduction gears 38, which are linked to the motor 2, and a differential gear 40, which is linked to one of the reduction gears 38, are accommodated in the driving unit housing 16. The third bracket 34 may instead be fixed to the cross members 36 via hinge pins.

In FIG. 2, roughly lowest portions of the lower surfaces of the leaf springs 24 are positioned immediately above the drive shafts 8. That is, the axle housings 22, which accommodate the drive shafts 8, are suspended by the leaf springs 24, specifically, saddles 42 located on the lower surfaces of the leaf springs 24 via rubber plates 44. Instead, the axle housings 22 may be suspended by the upper surfaces of the leaf springs 24.

The first hinge pin 28, which is provided in each of the first brackets 26, is inserted into a pin hole of the first bracket 26 via a rubber bush 46. On the other hand, the second hinge pin 32, which is provided in each of the second brackets 30, is inserted into a pin hole of the third bracket 34 via a rubber bush 48. As a result, the leaf springs 24, the axle housings 22, and hence the driving unit housing 16 are allowed to swing, and upward/downward vibration and other types of motion acting on the wheels 10 in the vehicle height direction Z are absorbed by the rubber plates 44 and the rubber bushes 46 and 48.

Commercial cars, such as trucks, are classified into a variety of car ranks on a vehicle specification basis. The rigid axle structure using the axle housings can readily ensure a vehicle width that allows incorporation of the driving apparatus 1 in accordance with the car rank. In a case where the driving apparatus 1 is incorporated in such a rigid axle structure in the related art, however, all components that form the driving apparatus 1, that is, the motor 2, the speed reducer 4, and the differential 6 all are inevitably supported along with the axle housings 22 via the leaf springs 24 in the vehicle height direction Z, or what is called non-suspended support is inevitably employed.

The non-suspended support undesirably increases the magnitude of vibration inputted to the motor 2 incorporated as part of the driving apparatus 1. In the motor 2, an electromagnetic coil is densely arranged, and the rotor rotates at high speed with the clearance between the electromagnetic coil and the inner wall of the motor-side housing 20 maintained at about several millimeters. Therefore, if large vibration resulting from a large magnitude of vibration inputted to the motor 2 causes the electromagnetic coil to come into contact and interfere with the inner wall of the motor-side housing 20, the reliability of the motor 2 could undesirably decrease.

On the other hand, it is known that when a running vehicle, for example, travels over a step, a member supported in a non-suspended manner vibrates at a frequency ranging from about 10 to 20 Hz, whereas a member supported in a suspended manner vibrates at a frequency ranging from about 2 to 3 Hz, which means that the magnitude of the vibration of the member supported in a suspended manner is suppressed to about 1/10 the magnitude of the vibration of the member supported in a non-suspended manner.

In view of the fact described above, in the present embodiment, a front portion of the motor-side housing 20 is supported by the vehicle body via the second and third brackets 30, 34, so that at least the front portion of the motor-side housing 20 is directly suspended by the side rails 14 to achieve suspended support. As a result, the magnitude of the vibration inputted to the motor 2 can be reduced nearly to about 1/10 the magnitude of the vibration inputted to the entire driving apparatus 1 and hence the entire driving unit housing 16. The rigid axle structure can therefore be used to handle a variety of car ranks and ensure the reliability of the motor 2.

Further, the driving unit housing 16 primarily swings around the pin centers C of the first hinge pins 28 provided in the first brackets 26 that support the leaf springs 24 on the front side of the vehicle. Specifically, the driving unit housing 16 primarily swings around the pin centers C along a swing path T, which passes through the saddles 42, on which the leaf springs 24 are placed.

The vibration of the driving unit housing 16 resulting from the swing motion thereof along the swing path T propagates, to no small extent, to the motor-side housing 20 and hence the motor 2. However, considering that vibration hardly occurs at the center of swing motion along the swing path T in a theoretical sense, it is preferable to minimize the distance D between the center of a motor shaft 50 of the motor 2 and the pin centers C of the first hinge pins 28 so that the motor shaft 50 is close to or coincides with the pin centers C of the first hinge pins 28.

As a specific structure that allows the distance D between the center of the motor shaft 50 of the motor 2 and the pin centers C of the first hinge pins 28 to be minimized, the driving unit housing 16 may be so disposed that the motor shaft 50 of the motor 2 is higher than the lowest surfaces of the leaf springs 24 in the vehicle height direction Z, as shown in FIG. 2. In other words, the second bracket 30 and the second hinge pin 32 may be so disposed that the motor shaft 50 of the motor 2 is higher than the axis of rotation of the differential gear 40.

The magnitude of the vibration that propagates to the motor 2 can thus be further reduced, whereby the reliability of the motor 2 can be further effectively ensured. The motor shaft 50 is allowed to be close to or coincide with the pin centers C of the first hinge pins 28 by in-advance consideration of the positions of the first and second brackets 26, 30 and the layout of the motor 2 in the structure that supports the driving unit housing 16.

### (Second embodiment)

FIG. 3 is a side view diagrammatically showing a structure that supports the vehicle driving apparatus according to a second embodiment of the present invention. The same configurations as those in the first embodiment will not be described. An elastic support that forms the suspension 12 may be formed of a combination of the leaf springs 24 and air springs 52, as shown in FIG. 3. In FIG. 3, the air springs 52 are each disposed between one end of the corresponding leaf spring 24 and the corresponding side rail 14.

The motor-side housing 20 of the driving unit housing 16 is rotatably supported by the vehicle body via a hinge pin and a bracket that are not shown, and the differential-side housing 18 of the driving unit housing 16 is supported on the upper surfaces of the leaf springs 24 via support areas, which are not shown, of the axle housings 22. The entire driving unit housing 16 is allowed to swing while being supported by the leaf springs 24 and further allowed to move upward and downward while being supported by the air springs 52. Even in this case, since at least a front portion of the motor-side housing 20 can be directly suspended by the side rails 14 to achieve suspended support, the magnitude of the vibration inputted to the motor 2 can be reduced.

The rigid axle structure can therefore be used to handle a variety of car ranks and ensure the reliability of the motor 2. The reliability of the motor 2 can further effectively ensured by minimizing the distance D between the center of the motor shaft 50 of the motor 2 and the pin centers C of the first hinge pins so that the motor shaft 50 is close to or coincides with the pin centers C of the first hinge pins 28.

The embodiments of the driving apparatus 1 according to the present invention have been described above, but embodiments of the present invention are not limited to those described above. The invention is limited only by the scope of the appended claims.

For example, in the first embodiment, the axle housings 22 are supported by the vehicle body with the axle housings 22 swinging around the first hinge pins 28 as the center of rotation in the first bracket 26, whereas the motor-side housing 20 is supported by the vehicle body with the motor-side housing 20 swinging around the second hinge pin 32 as the center of rotation in the second bracket 30. However, the structure that supports the driving apparatus 1 is not limited to the exact forms in the first and second embodiments, and at least a front portion of the motor-side housing 20 only needs to be supported in a suspended manner.

Further, the driving unit housing 16 swings not only along the swing path T described above but around the pin center of the second hinge pin 32. The difference between the latter swing path and the swing path T described above is absorbed by the rubber plate 44 and the rubber bushes 46 and 48. Torsion of the vehicle body in the direction of rolling is also absorbed as appropriate by the rubber plate 44 and the rubber bushes 46 and 48. The magnitude of the vibration inputted to the motor 2 can therefore be further reduced, whereby the reliability of the motor 2 can further be effectively ensured.

The driving apparatus 1 according to the present embodiment can, of course, be used in a variety of vehicles including passenger cars as well as electrically powered commercial cars, such as electrically powered trucks.

## Claims

1. A vehicle comprising a vehicle body, the vehicle body comprising two side rails (14), and a vehicle driving apparatus (1) comprising:
a driving unit housing (16) that integrally accommodates a motor (2) that drives a vehicle, a speed reducer (4) that is linked to the motor (2), and a differential gear (6, 40) that is linked to the speed reducer (4) and transmits driving force produced by the motor (2) to driving wheels (10) of the vehicle;
an axle housing (22) to which a differential-side housing (18) of the driving unit housing (16) is linked and which integrally accommodates drive shafts (8) of the driving wheels (10);
a first support (26) that allows a first rotary support shaft (28) linked to a vehicle body of the vehicle to be elastically linked to the axle housing (22) and the axle housing (22) to swing around the first rotary support shaft (28) as a center of rotation so that the axle housing (22) is supported by the vehicle body; and
a second support (30) that allows a second rotary support shaft (32) linked to the vehicle body of the vehicle to be elastically linked to a motor-side housing (20) of the driving unit housing (16) and the motor-side housing (20) to swing around the second rotary support shaft (32) as a center of rotation so that the motor-side housing (20) is supported by the vehicle body, the second support (30) is disposed so that a motor shaft (50) of the motor (2) is higher in a vehicle height direction than an axis of rotation of the differential gear (40) oriented in substantially the same direction as the motor shaft (50);
**characterized in that**
a pair of leaf springs (24) extend in the vehicle frontward/rearward direction, wherein the opposite ends of each of the leaf springs (24) are suspended by the corresponding side rail 14 via first supports (26), and
wherein the axle housings (22) are suspended by the respective leaf springs (24).

2. The vehicle according to claim 1, wherein the driving unit housing (16) is so supported that a motor shaft (50) of the motor (2) is close to the center of rotation of the first rotary support shaft (28).

3. The vehicle according to one of the claims 1 to 2, wherein the second support (30) is fixed to a front portion of the motor-side housing (20) and wherein the second bracket (30) is so linked to a third bracket (34) as to be rotatable relative thereto via a second rotary support shaft (32).

## Patentansprüche

1. Fahrzeug mit einer Fahrzeugkarosserie, wobei die Fahrzeugkarosserie zwei Seitenschienen (14) umfasst, und einer Fahrzeugantriebsvorrichtung (1), die umfasst:
ein Antriebseinheitsgehäuse (16), das integral einen Motor (2), der ein Fahrzeug antreibt, ein Untersetzungsgetriebe (4), das mit dem Motor (2) verbunden ist, und ein Differentialgetriebe (6, 40), das mit dem Untersetzungsgetriebe (4) verbunden ist und eine durch den Motor (2) erzeugte Antriebskraft zu Antriebsrädern (10) des Fahrzeugs überträgt, aufnimmt;
ein Achsgehäuse (22), mit dem ein Differentialseitengehäuse (18) des Antriebseinheitsgehäuses (16) verbunden ist und das integral Antriebswellen (8) der Antriebsräder (10) aufnimmt;
einen ersten Träger (26), der ermöglicht, dass eine erste Drehstützwelle (28), die mit einer Fahrzeugkarosserie des Fahrzeugs verbunden ist, mit dem Achsgehäuse (22) elastisch verbunden ist und das Achsgehäuse (22) um die erste Drehstützwelle (28) als Drehzentrum schwenkt, so dass das Achsgehäuse (22) durch die Fahrzeugkarosserie abgestützt ist; und
einen zweiten Träger (30), der ermöglicht, dass eine zweite Drehstützwelle (32), die mit der Fahrzeugkarosserie des Fahrzeug verbunden ist, mit einem Motorseitengehäuse (20) des Antriebseinheitsgehäuses (16) elastisch verbunden ist und das Motorseitengehäuse (20) um die zweite Drehstützwelle (32) als Drehzentrum schwenkt, so dass das Motorseitengehäuse (20) durch die Fahrzeugkarosserie abgestützt ist, der zweite Träger (30) so angeordnet ist, dass eine Motorwelle (50) des Motors (2) in einer Fahrzeughöhenrichtung höher liegt als eine Drehachse des Differentialgetriebes (40), die im Wesentlichen in derselben Richtung wie die Motorwelle (50) orientiert ist;
**dadurch gekennzeichnet, dass**
ein Paar von Blattfedern (24) sich in der Fahrzeug-Vorwärts-RückwärtsRichtung erstreckt, wobei die entgegengesetzten Enden von jeder der Blattfedern (24) durch die entsprechende Seitenschiene 14 über erste Träger (26) aufgehängt sind, und wobei die Achsgehäuse (22) durch die jeweiligen Blattfedern (24) aufgehängt sind.

2. Fahrzeug nach Anspruch 1, wobei das Antriebseinheitsgehäuse (16) so abgestützt ist, dass eine Motorwelle (50) des Motors (2) nahe dem Drehzentrum der ersten Drehstützwelle (28) liegt.

3. Fahrzeug nach einem der Ansprüche 1 bis 2, wobei der zweite Träger (30) an einem vorderen Teil des Motorseitengehäuses (20) befestigt ist und wobei der zweite Halter (30) so mit einem dritten Halter (34) verbunden ist, dass er relativ zu diesem über eine zweite Drehstützwelle (32) drehbar ist.

## Revendications

1. Véhicule, comprenant une carrosserie de véhicule, la carrosserie de véhicule comprenant deux longerons (14), et un appareil de transmission de véhicule (1) comprenant :
un carter de pont de transmission (16) qui loge de façon monobloc un moteur (2) qui propulse un véhicule, un réducteur de vitesse (4) qui est lié au moteur (2), et un engrenage différentiel (6, 40) qui est lié au réducteur de vitesse (4) et transmet une force motrice produite par le moteur (2) à des roues motrices (10) du véhicule ;
un carter d'essieu (22) auquel un carter côté différentiel (18) du carter de pont de transmission (16) est lié et qui loge de façon monobloc des arbres de transmission (8) des roues motrices (10) ;
un premier support (26) qui permet à un premier arbre de support rotatif (28) lié à une carrosserie de véhicule du véhicule d'être élastiquement lié au carter d'essieu (22) et au carter d'essieu (22) de pivoter autour du premier arbre de support rotatif (28) en tant que centre de rotation, pour que le carter d'essieu (22) soit supporté par la carrosserie de véhicule ; et
un second support (30) qui permet à un second arbre de support rotatif (32) lié à la carrosserie de véhicule du véhicule d'être élastiquement lié à un carter côté moteur (20) du carter de pont de transmission (16) et au carter côté moteur (20) de pivoter autour du second arbre de support rotatif (32) en tant que centre de rotation, pour que le carter côté moteur (20) soit supporté par la carrosserie de véhicule, le second support (30) est disposé pour qu'un arbre de moteur (50) du moteur (2) soit plus haut dans une direction de hauteur de véhicule qu'un axe de rotation de l'engrenage différentiel (40) orienté dans sensiblement la même direction que l'arbre de moteur (50) ;
**caractérisé en ce que**
une paire de ressorts à lames (24) s'étendent dans la direction avant/arrière de véhicule, dans lequel les extrémités opposées de chacun des ressorts à lames (24) sont suspendues par le longeron correspondant (14) par l'intermédiaire de premiers supports (26), et dans lequel les carters d'essieu (22) sont suspendus par les ressorts à lames respectifs (24).

2. Appareil de véhicule (1) selon la revendication 1, dans lequel le carter de pont de transmission (16) est supporté pour qu'un arbre de moteur (50) du moteur (2) soit proche du centre de rotation du premier arbre de support rotatif (28).

3. Appareil de véhicule (1) selon l'une des revendications 1 à 2, dans lequel le second support (30) est fixé à une partie avant du carter côté moteur (20) et dans lequel le second support (30) est lié à un troisième support (34) afin d'être rotatif relativement à celui-ci par l'intermédiaire d'un second arbre de support rotatif (32).
